# EUROPÄISCHE PATENTANMELDUNG

(11) **EP 4 566 806 A1**
(43) Veröffentlichungstag der Anmeldung: **11.06.2025**
(21) Anmeldenummer: 23215270.2
(22) Anmeldetag: 08.12.2023
(51) Int. Cl.: B32B 1/08, B32B 27/34, B32B 27/08, B32B 27/32, F16L 11/04

(54) **HOHLKÖRPER MIT PEBA IN DER AUSSENSCHICHT**

(71) Anmelder: Evonik Operations GmbH, 45128 Essen (DE)
(72) Erfinder: Die Erfindernennung liegt noch nicht vor
(74) Vertreter: Evonik Patent Association

(57) **Zusammenfassung**

Gegenstand der Erfindung ist ein mehrschichtiger Hohlkörper geeignet zur Lagerung oder zum Transport eines wässrigen Mediums, wobei der Hohlkörper eine Außenschicht aufweist, die Polyetherblockamid enthält.

## Beschreibung

Im Bereich der Kühlmittelleitung von Kraftfahrzeugen sind in den letzten Jahren steigende Anforderungen an die Langzeitbeständigkeit sowie bei hohen Betriebstemperaturen des Leitungssystems gefordert. Die erforderlichen guten mechanischen Eigenschaften einschließlich der erforderlichen Berstdruckbeständigkeit bei erhöhten Temperaturen oberhalb von 100 °C werden durch Polyamide erbracht.

Als Kühlflüssigkeit kommt ein Gemisch aus Wasser und Frostschutzmittel (meist Ethylenglykol) zum Einsatz, es können jedoch auch Glykole mit reduzierter Funktionalität, z.B. Monoethylenglykole verwendet werden. Häufig wird dabei entmineralisiertes Wasser oder destilliertes Wasser verwendet. Je nach Einsatzfall werden außerdem spezielle Additive eingesetzt, die einen zusätzlichen Korrosions- und Rostschutz bieten. Derartige Kühlmittel weisen einen erhöhten Siedepunkt auf.

Reine Polyolefinleitungen zeigen in diesem erhöhten Temperaturbereich eine ungenügende Berstdruckfestigkeit; die Beständigkeit gegen Fette und Öle ist ebenfalls eingeschränkt. Allerdings weisen Monoleitungen aus Polyamiden keine ausreichende Hydrolysebeständigkeit auf; durch das Quellungsverhalten in Kühlflüssigkeit wird die mechanische Festigkeit ebenfalls reduziert.

Aus diesem Grund sind im Stand der Technik mehrschichtige Kühlmittelleitungen bekannt, die eine polyolefinische Innenschicht und eine Polyamidaußenschicht besitzen.

EP0436923A beschreibt teilgewellte mehrschichtige Kühlmittelleitungen aus einer polyolefinischen Innenschicht und einer Polyamidaußenschicht, die gegebenenfalls über eine Haftvermittlerschicht miteinander verbunden sind.

Der Schwachpunkt bei derartigen Rohren ist die polyolefinische Innenschicht. Es hat sich gezeigt, dass gerade Polypropylen unter den Betriebsbedingungen relativ rasch versprödet. Eine Ursache hierfür kann der im Kühlsystem gelöste Sauerstoff oder der von außen durch die Polymerschicht(en) nach innen diffundierende Sauerstoff sein.

Eine Konsequenz der Versprödung der Innenschicht ist häufig die, dass sich Mikrorisse bilden, in denen Kühlflüssigkeit zur Polyamidaußenschicht gelangt. Die dann einsetzende Hydrolyse führt zu einem erheblichen Rückgang der Berstdruckfestigkeit und schließlich zu einem Versagen des Rohrs.

In EP1771298A1 werden Zwei-, bzw. Dreischichtrohre als Kühlmittelleitungen beschrieben. Diese weisen eine Polyolefininnenschicht und eine Polyamidaußenschicht auf. Die Außenschicht ist aus aliphatischen Homopolyamiden aufgebaut, bevorzugt aus PA 6.12. Derartige Rohre zeigen nach 1000 Stunden im Kontakt mit Glykol/Wasser (1/1 Volumen-Mischung) bei 130°C keine Brüche in der Schlagprüfung (SAE J2260), allerdings bei stetig nachlassender Elastizität (elongation at break).

Aufgabe der vorliegenden Erfindung ist daher zumindest einen Nachteil des Standes der Technik zu überwinden.

Überraschend wurde gefunden, dass durch die Verwendung einer Polyetherblockamid enthaltenden Außenschicht die Gebrauchszeit von Kühlmittelleitungen erhöht werden kann.

Gegenstand der Erfindung ist ein mehrschichtiger Hohlkörper geeignet zur Lagerung oder zum Transport eines wässrigen Mediums, wobei der Hohlkörper eine Außenschicht aufweist, die Polyetherblockamid enthält.

Ein weiterer Gegenstand der Erfindung ist die Verwendung der Hohlkörper zur Lagerung oder zum Transport eines wässrigen Mediums.

Das wässrige Medium enthält bevorzugt Alkohol. Der Alkohol weist eine oder mehrere Hydroxygruppen auf, bevorzugt 2 Hydroxygruppen, mehr bevorzugt zwei terminale Hydroxygruppen. Weiterhin bevorzugt ist der Alkohol ein Glykol, insbesondere bevorzugt Ethylenglykol. Das wässrige Medium enthält neben Alkohol optional weitere Additive. Das wässrige Medium ist über einen weiten Temperaturbereich bevorzugt homogen, das heißt es ist einphasig, es enthält dann also nur eine flüssige Phase. Die Einphasigkeit besteht im gesamten angewendeten Temperaturbereich.

Der Temperaturbereich ist bevorzugt -50°C bis +150°C, mehr bevorzugt -30 bis 130°C, insbesondere bevorzugt - 15° bis 95°C.

Die weiteren Additive können auch einen Feststoff enthalten, der bei niedrigen Temperaturen aus der Lösung partiell abgeschieden wird und bei höheren Temperaturen wieder in Lösung geht. Dazu müssen die Additive des weiteren Detergenzien aufweisen, die ein Verklumpen bei der kältebedingten Abscheidung verhindern.

Bevorzugt ist das wässrige Medium ein Kühlmittel. Damit ist der beanspruchte mehrschichtiger Hohlkörper zur Lagerung oder zum Transport eines Kühlmittels ausgelegt. Mehr bevorzugt ist der mehrschichtige Hohlkörper eine Kühlmittelleitung.

Die erfindungsgemäßen Hohlkörper weisen gegenüber dem Stand der Technik, z.B. EP1771298A, eine deutlich verlängerte Gebrauchsdauer auf. Der Fachmensch nähme an, dass die Anwendung einer PEBA-Außenschicht nicht zu einer Verlängerung der Verwendungszeit führen würde, da bekannt ist, dass PEBA-Formmassen eine erhöhte Sauerstoffdurchlässigkeit aufweisen, siehe Tabelle 3. Damit nähme man an, dass eine zu erwartende Versprödung der polyolefinischen Innenschicht so nicht zu vermeiden sei.

Weiterhin hätte der Fachmensch erwartet, dass durch die mäßige Hydrolysebeständigkeit der Elastomerschicht des Rohrs die Standzeit der erfindungsgemäßen Hohlkörper nicht verlängert würde.

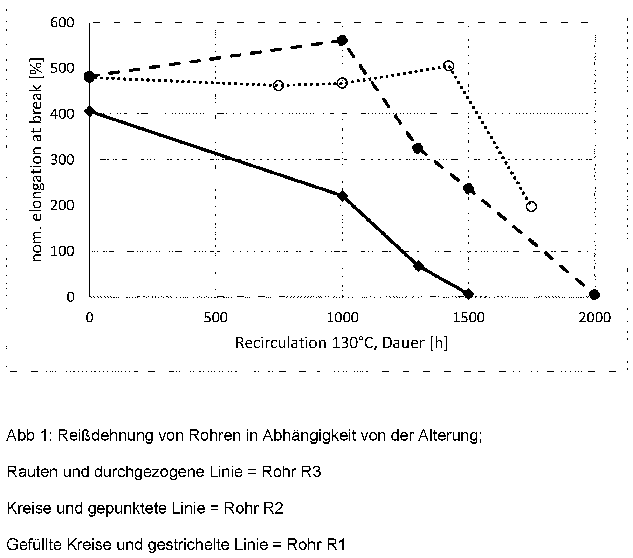

Abb. 1 zeigt jedoch den überraschenden umgekehrten Effekt der Verwendung einer elastomerhaltigen Polyamidschicht als äußere Schicht.

Die erfindungsgemäßen Hohlkörper, sowie die erfindungsgemäßen Verwendungen werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahmen von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden nachfolgend %-Angaben gemacht, so handelt es sich, wenn nicht anders angegeben, um Angaben in Gewichts-%. Bei Zusammensetzungen beziehen sich die %-Angaben, wenn nicht anders angegeben auf die Gesamtzusammensetzung. Werden nachfolgend Mittelwerte angegeben, so handelt es sich, wenn nicht anders angegeben, um Massenmittel (Gewichtsmittel). Werden nachfolgend Messwerte angegeben, so wurden diese Messwerte, wenn nicht anders angegeben, bei einem Druck von 101325 Pa und einer Temperatur von 25 °C ermittelt.

Die gegebenenfalls verschiedenen Einheiten der Polyamide sind statistisch verteilt. Statistische Verteilungen sind blockweise aufgebaut mit einer beliebigen Anzahl an Blöcken und einer beliebigen Sequenz oder sie unterliegen einer randomisierten Verteilung, sie können auch alternierend aufgebaut sein oder auch über die Polymerkette einen Gradienten bilden, insbesondere können sie auch alle Mischformen bilden, bei denen gegebenenfalls Gruppen unterschiedlicher Verteilungen aufeinander folgen können. Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht.

Die Polyamide im Sinne der vorliegenden Erfindung können Homopolymere, CoPolymere oder Blends unterschiedlicher Polyamide sein. Die Unterschiede der Polyamide können z.B. aufgrund unterschiedlicher verwendeter Monomere in der Polymerisation, unterschiedlicher Molmassenverteilung (welche sich z.B. in unterschiedlichen Viskositäten ausdrücken kann) oder unterschiedlichen Endgruppen-Anzahl ausdrücken.

Bevorzugt sind die Polyamide ausgewählt aus aliphatischen und (teil)aromatischen Polyamiden, geeignete Monomere können ω-Aminosäuren oder Lactame sein, dies führt zu sogenannten AB Polyamiden (sogenannter Perlontyp), Diamine oder Disäuren sein, dies führt zu sogenannten AA.BB Polyamiden (sogenannter Nylontyp) oder entsprechenden Copolyamide beider Typen. Optional können die Monomere substituiert sein, wobei die Substituenten im Sinne der Polymerisation/Polykondensation inert sein müssen, bevorzugt keine Brönstedt-Säuren oder -Basen darstellen. Die Monomere können im Falle der Bildung von AA.BB Polyamiden sogenannte semiaromatische Polyamide bilden, das heißt, dass lediglich einer der beiden Bausteine, Diamin oder Disäure, einen aromatischen Kern aufweist.

Bevorzugte Monomere sind ausgewählt aus aliphatischen C4 bis C12-Lactamen oder ω-Aminocarbonsäuren mit 4 bis 44 Kohlenstoffatomen, bevorzugt 4 bis 18 Kohlenstoffatomen; aus mindestens einem Diamin aus der Gruppe der aliphatischen Diamine mit 4 bis 18 C-Atomen, der cycloaliphatischen Diamine mit 7 bis 22 C-Atomen und der aromatischen Diamine mit 6 bis 22 C-Atomen in Kombination mit mindestens einer Dicarbonsäure aus der Gruppe aus aliphatischen Dicarbonsäuren mit 4 bis 44 C-Atomen, cycloaliphatischen Dicarbonsäuren mit 8 bis 24 C-Atomen und aromatischen Dicarbonsäuren mit 8 bis 20 C-Atomen.

Mehr bevorzugt sind die Polyamide ausgewählt aus PA 8, PA 9, PA 10, PA 11, PA 12, PA 13, PA 14, PA 16, PA 4.6, PA 6.10, PA 6.12, PA 6.13, PA 6.14, PA 6.16, PA 8.10, PA 8.12, PA 8.13, PA 8.14, PA 9.10, PA 9.12, PA 10.10, PA 10.12, PA 10.14, PA 10.16, PA 10.18, PA 12.12, PA 12.14, PA 12.16, PA 6.T, PA 9.T, PA 10.T, PA 12.T und PA 14.T.

Der erfindungsgemäße Hohlkörper weist in seiner Wandung mindestens drei Schichten auf, eine äußere Schicht (i) aus einer Formmasse, die ein elastomeres Polyamid enthält, eine Zwischenschicht (ii) aus einer Formmasse, die ein nicht elastomeres Polyamid enthält und eine innere Schicht (iii) aus einer Formmasse, die ein Polyolefin aufweist, welches keine Halogenatome aufweist.

Der Polyamidanteil der Formmasse der Schicht (i) der erfindungsgemäßen Hohlkörper enthält ein elastomeres Polyamid bevorzugt mit einem Gehalt von mindestens 20 Gew.-%, mehr bevorzugt 30 Gew.-%, 40 Gew.-%, 50 Gew.-%, 60 Gew.-%, 70 Gew.-%, 80 Gew.-%, mindestens 90 Gew.-% und mehr bevorzugt mindestens 95 Gew.-%; bevorzugt höchstens 95 Gew.-%, 90 Gew.-%, 85 Gew.-%, 80 Gew.-%, 75 Gew.-%, 70 Gew.-%, insbesondere bevorzugt höchstens 65 Gew.-%; weiterhin bevorzugt zwischen 20 Gew.-% und 95 Gew.-%, mehr bevorzugt zwischen 40 Gew.-% und 85 Gew.-%. insbesondere bevorzugt besteht der Polyamidanteil der Formmasse der Schicht (i) aus einem elastomeren Polyamid.

Das elastomere Polyamid ist bevorzugt ein Blockcopolyamid und enthält bevorzugt Weichsegmente (WB) aus Polyether und bevorzugt Hartsegmente (HB) aus Polyamiden. Wobei die Hartsegmente im Zahlenmittel 8 oder mehr Kohlenstoffatome pro Amidgruppe aufweisen. Die Polyamide des Hartsegmentes sind bevorzugt ausgewählt aus PA 8, PA 9, PA 10, PA 11, PA 12, PA 13, PA 14, PA 16, PA 6.10, PA 6.12, PA 8.10, PA 8.12, PA 8.14, PA 10.10, PA 10.12, PA 10.14, PA 10,16, PA 12.12, PA 12.14, PA 12.16, mehr bevorzugt aus PA 10, PA 11, PA 12, PA 6.10, PA 6.12, PA 10.10, PA 10.12, insbesondere bevorzugt aus PA 11, PA 12, PA 6.10, PA 6.12.

Bevorzugt sind die Alkylketten des Polyethers nicht verzweigt, das heißt die Alkylketten sind bevorzugt linear, mehr bevorzugt Poly-1,2-ethylenglykol, Poly-1,3-propylenglykol, Poly-1,4-butylenglykol, besonders bevorzugt sind Poly-1,2-ethylenglykol und Poly-1,4-butylenglykol, insbesondere bevorzugt ist Poly-1,4-butylenglykol.

Bevorzugt sind die Polyether über eine Estergruppe an das Polyamid des Hartsegmentes gebunden.

Das elastomere Polyamid weist bevorzugt Weichsegmente auf, deren Molmasse kleiner ist als die Molmasse der Hartsegmente. Bevorzugt beträgt der Gewichtsanteil der Weichsegmente (WB) von 10 bis 49 Gew.-% bezogen auf die Gesamtmasse des elastomeren Polyamides (WB + HB), mehr bevorzugt 12 bis 40 Gew.-%, weiter mehr bevorzugt 15 bis 35 Gew.-% und insbesondere bevorzugt 18 bis 30 Gew.-%.

Die Formmasse der Schicht (i) weist im Polyamidteil der Formmasse bevorzugt zu mindestens 20 Gew-.% ein elastomeres Polyamid wie vorstehend beschrieben, optional ein nicht elastomeres Polyamid und zu mindestens 0,5 Gew.-% einen Wärmestabilisator auf. Weiter bevorzugt beträgt der Anteil des elastomeren Polyamids mindestens 20 bis zu 99,5 Gew.-% an der gesamten Formmasse der Schicht (i). Mehr bevorzugt beträgt der Anteil des elastomeren Polyamids mindestens 23, 26, 29, 32, 35, 40 Gew.-% und höchstens 99,5, 99, 98, 95, 90, 85, 80, 70 Gew.-%. Weiter mehr bevorzugt liegt der Anteil des elastomeren Polyamids von 26 bis 99, besonders bevorzugt von 29 bis 95 und insbesondere bevorzugt von 32 bis 85 Gew.-%.

Bevorzugt ist das elastomere Polyamid wärmestabilisiert.

Geeignete Wärmestabilisatoren sind aromatische Amine. Bevorzugte Wärmestabilisatoren sind 4,4'-Bis(α,α-dimethylbenzyl)diphenylamin (Naugard 445) oder N,N'-Diphenyl-p-phenylenediamine, Bis(4-(1-methyl-1-phenylethyl) phenyl) amin, 2-Ethyl-2'-ethoy-oxal anilid, Dimethylglyoxim, 2,2 Bipyridin, 1,10-Phenanthroline, ortho-Phenylenediamine, 1,2-Diaminocyclohexane, 1,4-Diaminobutane, 8-Hydroxyquinoline, Harnstoff und/oder substituierte Harnstoffe. Geeignete kommerzielle Produkte sind NYLOSTAB S-EED von Clariant NAUGARD 445 von Addivant, OKABEST FLEX, OKABEST ULTRA-FLEX, OKABEST S-FLEX, OKABEST S-FLEX 2, OKABEST S-FLEX 3, OKAFLEX U und OKAFLEX EM von OKA - Tec oder Mischungen enthaltend die genannten Amine.

Mehr bevorzugt Wärmestabilisatoren sind, 4'-Bis(α,α-dimethylbenzyl)diphenylamin (Naugard 445) oder N,N'-Diphenyl-p-phenylenediamine, Phenylenediamine, Bis(4-(1-methyl-1-phenylethyl) phenyl) amin, NAUGARD 445 von Addivant, OKABEST FLEX, OKABEST ULTRA-FLEX, OKABEST S-FLEX, OKABEST S-FLEX 2, OKABEST S-FLEX 3, OKAFLEX U und OKAFLEX EM von OKA - Tec oder Mischungen enthaltend die genannten Amine.

Besonders bevorzugt ist Naugard 445.

Bevorzugt weist die Formmasse der Schicht (i) einen oder mehrere Wärmestabilisatoren in einer Gesamtmenge von 0,5 bis 2 Gew.-% auf, bezogen auf die Gesamtmasse der Formmasse, mehr bevorzugt 0,6 bis 1,8, weiter mehr bevorzugt 0,7 bis 1,6, besonders bevorzugt 0,8 - 1,4 und insbesondere bevorzugt 0,9 bis 1,2 Gew.-%.

Bevorzugt weist die Formmasse der Schicht (i) ein elastomeres Polyamid auf, dessen Blockcopolyamid im Weichsegment einen linearen Polyether aufweist, bevorzugt bestehend aus Poly-1,2-ethylenglykol, Poly-1,3-propylenglykol, Poly-1,4-butylenglykol, besonders bevorzugt sind Poly-1,2-ethylenglykol und Poly-1,4-butylenglykol, insbesondere bevorzugt ist Poly-1,4-butylenglykol, wobei der Polyether über eine Esterbindung an das Hartsegment gebunden ist.

Mehr bevorzugt weist die Formmasse der Schicht (i) einen oder mehrere Wärmestabilisatoren auf und ein elastomeres Polyamid, dessen Blockcopolyamid im Weichsegment einen linearen Polyether aufweist, bevorzugt bestehend aus Poly-1,2-ethylenglykol, Poly-1,3-propylenglykol, Poly-1,4-butylenglykol, besonders bevorzugt sind Poly-1,2-ethylenglykol und Poly-1,4-butylenglykol, insbesondere bevorzugt ist Poly-1,4-butylenglykol, wobei der Polyether über eine Esterbindung an das Hartsegment gebunden ist.

Bevorzugt weist die Formmasse der Schicht (i) einen oder mehrere Wärmestabilisatoren auf und Weichsegmente, deren Molmasse kleiner ist als die Molmasse der Hartsegmente.

Bevorzugt weist die Formmasse der Schicht (i) einen oder mehrere Wärmestabilisatoren und im Polyamidteil der Formmasse bevorzugt zu mindestens 20 Gew.-% ein elastomeres Polyamid auf.

Mehr bevorzugt weist die Formmasse der Schicht (i) einen oder mehrere Wärmestabilisatoren in einer Gesamtmenge von 0,5 bis 2 Gew.-% auf, und Weichsegmente, deren Molmasse kleiner ist als die Molmasse der Hartsegmente, wobei der Anteil an elastomerem Polyamid in der Formmasse mindestens 20 Gew.-% beträgt.

Die Formmassen der Schicht (i) enthalten bevorzugt kein funktionalisiertes Polyolefin.

Die nicht elastomeren Polyamide der Schicht (ii) sind bevorzugt aminterminiert, das heißt nach Bestimmung der Endgruppen ist die Zahl der Amintermini größer als die Zahl der Säuretermini.

Dem Fachmenschen ist bekannt, wie die Termini von Polyamiden definiert synthetisiert werden können. Dies geschieht mit sogenannten Reglern. Im Falle von Polyamiden des Nylontyps kann dies ein schlichter stöchiometrischer Überschuss einer der beiden Komponenten sein. Im Falle der aminterminierten nicht elastomeren Polyamiden werden die Diamine im Überschuss eingesetzt.

Oder es wird ein sogenannter externer Regler zugesetzt, dies kann für beide Polyamidtypen (Perlon und Nylon) durchgeführt werden. Diese Regler können z.B. im Sinne der Polyamidbildung mono-funktionalisierte aliphatische oder aromatische Verbindungen sein, auf diese Weise entstehen im Sinne der Polyamidbildung inerte Termini. Oder es werden als Regler (für Perlontypen) diamino- funktionalisierte wie auch disäure- funktionalisierte aliphatische oder aromatische Verbindungen eingesetzt.

Bevorzugt weisen die aminterminierten Polyamide eine Menge der Aminendgruppen von 30 mmol/kg bis 70 mmol/kg und besonders bevorzugt von 40 mmol/kg bis 60 mmol/kg auf.

Bevorzugt beträgt das Verhältnis der Amintermini zu den Säuretermini 4 bis 12.

Weiterhin bevorzugt liegt die relative Lösungsviskosität im Bereich 1,9 bis 2,3.

In einer weiteren Ausführungsform können auch aminterminierte Polyamide mit niedrigerer relativer Lösungsviskosität zusätzlich enthalten sein, was die Menge der Aminendgruppen auf bis zu 100 mmol/kg erhöhen kann.

Dem Fachmenschen ist bekannt wie die Endgruppen von Polyamiden bestimmt werden, bevorzugt werden sie mittels Titration, mehr bevorzugt nach den Verfahren der Beispiele bestimmt.

Bevorzugt weist die Formmasse der Schicht (ii) kein weiteres Polyamid auf.

Die erfindungsgemäßen polyamidhaltigen Formmassen enthalten bevorzugt weitere Additive.

Bevorzugte Additive sind Oxidationsstabilisatoren, UV-Stabilisator, Hydrolysestabilisatoren, Schlagzähmodifikatoren, Pigmente, Farbstoffe und/oder Verarbeitungshilfsmittel.

In einer bevorzugten Ausführungsform enthalten die Formmassen eine wirksame Menge eines Oxidationsstabilisators und besonders bevorzugt eine wirksame Menge eines Oxidationsstabilisators in Kombination mit der wirksamen Menge eines kupferhaltigen Stabilisators. Geeignete Oxidationsstabilisatoren sind beispielweise aromatische Amine, sterisch gehinderte Phenole, Phosphite, Phosphonite, Thiosynergisten, Hydroxylamine, Benzofuranonderivate, acryloylmodifizierte Phenole etc. Derartige Oxidationsstabilisatoren sind in einer Vielzahl von Typen kommerziell erhältlich, beispielsweise unter den Handelsnamen Irganox 1010, Irganox 1098, Irgafos 168, P-EPQ oder Lowinox DSTDP. Im Allgemeinen enthalten die Formmassen etwa 0,01 bis etwa 2 Gew.-% und bevorzugt etwa 0,1 bis etwa 1,5 Gew.-% eines Oxidationsstabilisators.

Darüber hinaus können die Formmassen auch einen UV-Stabilisator bzw. einen Lichtstabilisator vom HALS-Typ enthalten. Geeignete UV-Stabilisatoren sind in erster Linie organische UV-Absorber, beispielsweise Benzophenonderivate, Benzotriazolderivate, Oxalanilide oder Phenyltriazine. Lichtstabilisatoren vom HALS-Typ sind Tetramethylpiperidinderivate; es handelt sich hier um Inhibitoren, die als Radikalfänger wirken. UV-Stabilisatoren und Lichtstabilisatoren können vorteilhaft in Kombination eingesetzt werden. Beide sind in einer Vielzahl von Typen kommerziell erhältlich; hinsichtlich der Dosierung kann den Herstellerangaben gefolgt werden.

Die Formmassen können zusätzlich einen Hydrolysestabilisator enthalten wie etwa ein monomeres, oligomeres oder polymeres Carbodiimid oder ein Bisoxazolin.

Weiterhin können die Formmassen Schlagzähmodifikatoren enthalten. Schlagzähmachende Kautschuke für Polyamidformmassen sind Stand der Technik. Sie enthalten funktionelle Gruppen, die von ungesättigten funktionellen Verbindungen herrühren, die entweder in die Hauptkette einpolymerisiert oder auf die Hauptkette aufgepfropft wurden. Am gebräuchlichsten sind EPM- oder EPDM-Kautschuk, der mit Maleinsäureanhydrid radikalisch gepfropft wurde. Derartige Kautschuke können auch zusammen mit einem unfunktionalisierten Polyolefin wie z. B. isotaktischem Polypropylen eingesetzt werden, wie in der EP0683210A2 (US5874176A) und/oder in EP2132030A2 (US2010/0183837A1) beschrieben.

Geeignete Pigmente und/oder Farbstoffe sind beispielsweise, Ruß, organische Farbpigmente, Eisenoxid, Zinksulfid, Ultramarin, Nigrosin, Perlglanzpigmente.

Geeignete Verarbeitungshilfsmittel sind beispielsweise Paraffine, Fettalkohole, Fettsäureamide, Stearate wie Calciumstearat, Paraffinwachse, Montanate oder Polysiloxane.

Die vorbezeichneten Polyamide der nicht elastomeren Formmasse sind prinzipiell geeignet gemeinsam mit den vorbezeichneten elastomeren Polyamiden als Weichsegment den Polyamidanteil der Schicht (i) zu bilden, wobei die Hartsegmente säureterminiert sein müssen.

Bevorzugt weisen die Formmassen der Schicht (ii) ein funktionalisierte Polyolefin auf, bevorzugt einen Schlagzähmodifizierer.

Das Polyolefin der Schicht (iii) enthält bevorzugt als Mehrheitskomponente (mit mehr als 50 Gew-%) Polypropylen. In einer mehr bevorzugten Ausführungsform enthält das Polyolefin mindestens 0,5 Gew.-%, mindestens 0,6 Gew.-%, mindestens 0,7 Gew.-%, mindestens 0,8 Gew.-% oder mindestens 0,9 Gew.-% sowie maximal 20 Gew.-%, maximal 15 Gew.-%, maximal 12 Gew.-%, maximal 10 Gew.-% oder maximal 8 Gew.-% an einpolymerisiertes Ethen. Darüber hinaus können bis zu 15 Gew.-% 1-Buten einpolymerisiert sein.

Die Polyolefinformmasse der Innenschicht (iii) kann grundsätzlich jeden handelsüblichen Polypropylentyp enthalten, beispielsweise isotaktisches oder syndiotaktisches Homopolypropylen, ein Randomcopolymer von Propen mit Ethen und/oder Buten-1, ein Ethylen-Propylen-Blockcopolymer, ein thermoplastisches Elastomer auf Polypropylenbasis und dergleichen. Es kann eine Schlagzähkomponente wie z. B. EPM- oder EPDM-Kautschuk oder SEBS enthalten. Darüber hinaus können die üblichen Hilfs- und Zusatzstoffe enthalten sein, beispielsweise Pigmente bzw. Füllstoffe wie Ruß, Titandioxid, Zinksulfat, Silikate oder Carbonate oder Verarbeitungshilfsmittel wie Wachse, Zinkstearat oder Calciumstearat. Anteile an Polypropylen in der Formmasse sind mindestens mehr als 50 Gew.-%, mindestens 60 Gew.-%, mindestens 70 Gew.-%, mindestens 80 Gew.-% oder mindestens 90 Gew.-%.

Besonders bevorzugt besitzt das verwendete Polyolefin der innersten Schicht (iii) eine Melt Flow Rate (MFR) gemäß ISO 1133 (230 °C/2,16 kg) im Bereich von 0,1 bis 3 g/10 min, besonders bevorzugt im Bereich von 0,15 bis 2 g/10 min, insbesondere bevorzugt im Bereich von 0,18 bis 1,5 g/10 min und ganz besonders bevorzugt im Bereich von 0,2 bis 1 g/10 min.

Besonders bevorzugt ist das Polyolefin der innersten Schicht (iii) ein Propen-Ethen-Blockcopolymer, häufig auch als Heterophasen-Copolymer bezeichnet. Derartige Heterophasen-Copolymere können beispielsweise in einem zweiphasigen Prozess hergestellt werden, der in etwa wie folgt abläuft: Zuerst wird, z. B. mit einem Ziegler-Natta-Katalysator, ein hoch isotaktisches Polypropylen hergestellt, wobei unter Umständen eine kleine Menge Ethen anwesend sein kann, was ein Random-Polymerisat ergibt. Dieses Material fungiert als Matrix eines Heterophasen-Copolymers. In einem zweiten Reaktionsschritt (gegebenenfalls in einem anderen Reaktor) wird gegebenenfalls ein zweiter Katalysator eingebracht, z. B. ein Metallocenkatalysator. Nun erfolgt eine Copolymerisation von Ethen mit Propen, wobei sich diese Polymerisation in Hohlräumen des ersten Polymerisats abspielt. Dadurch wird das zweite Polymerisat dort eingelagert.

Mehr bevorzugt weist das Polyolefin einen Wärmestabilisator auf. Dieser ist beispielsweise ein sterisch gehindertes Phenol oder eine Schwefelverbindung, wie z. B. ein Dialkylester der Thiopropionsäure oder ein Thiodiethylendiester. Derartige Verbindungen sind handelsüblich; selbstverständlich können auch Mischungen verschiedener Wärmestabilisatoren eingesetzt werden.

Weiterhin enthält das Polyolefin bevorzugt einen Metalldesaktivator, welcher bevorzugt phenolbasiert ist.

Besonders bevorzugt ist eine Stabilisatormischung enthaltend als Wärmestabilisator mindestens ein sterisch gehindertes Phenol und mindestens eine Schwefelverbindung und einen Metalldesaktivator.

Bevorzugt beträgt die Menge an Stabilisatoren 0,3 bis 2 Gew.-%, mehr bevorzugt 0,5 bis 1,5 Gew.-% und besonders bevorzugt 0,7 bis 1,2 Gew.-%, bezogen auf die Gesamtmasse des Polyolefins.

Weiterhin weist das Polyolefin bevorzugt einen nanoskaligen Füllstoff auf. Dieser mindestens eine Füllstoff ist bevorzugt ausgewählt aus, Farbpartikeln und Partikeln, die die Wärmeleitfähigkeit erniedrigen. Bevorzugte Farbpartikel sind Rußpartikel.

Die Polyolefin-Innenschicht (Schicht iii) besitzt im bevorzugten Fall eine Dicke von mindestens 0,3 mm und besonders bevorzugt von mindestens 0,4 mm. Die Gesamtwandstärke des Rohres liegt hierbei vorzugsweise im Bereich von 0,8 bis 2,5 mm, besonders bevorzugt im Bereich von 0,9 bis 2 mm und insbesondere bevorzugt im Bereich von 1 bis 1,5 mm; der Außendurchmesser des Rohres liegt vorzugsweise im Bereich von 8 bis 50 mm, besonders bevorzugt im Bereich von 10 bis 40 mm und insbesondere bevorzugt im Bereich von 12 bis 30 mm.

In einer zweiten möglichen Ausführungsform enthält die Innenschicht (iii) eine weitere Schicht (iiia), und diese Schicht (iiia) liegt zwischen Schicht (ii) und Schicht (iii).

Die Schicht (iiia) ist bevorzugt modifiziert, die Schicht (iii) ist bevorzugt nicht modifiziert. Bevorzugt ist die Modifizierung eine Haftmodifikation. Abgesehen von der Haftungsmodifizierung können für die Schichtenmaterialien unterschiedliche Polyolefinformmassen eingesetzt werden.

Die Formmasse der Haftvermittlerschicht (iiia) weist bevorzugt ein Polyolefin auf,

Das Polyolefin der Schicht (iiia) kann ein Copolymere von Propylen/Ethylen sein, welches mit einem ungesättigten Epoxid und gegebenenfalls mit einem Ester oder einem Salz einer ungesättigten Carbonsäure oder eines Vinylesters einer gesättigten Carbonsäure modifiziert ist. Dies sind beispielsweise Propylen/Ethylen/Vinylacetat/ Glycidyl(meth)acrylat-Copolymere oder Propylen/Ethylen/Alkyl(meth)acrylat/ Glycidyl(meth)acrylat-Copolymere; oder Copolymere von Propylen mit einem ungesättigten Carbonsäureanhydrid und/oder mit einer ungesättigten Carbonsäure, die teilweise durch ein Metall (Zn) oder ein Alkalimetall (Li) neutralisiert werden kann, und gegebenenfalls eines Esters einer ungesättigten Carbonsäure oder eines Vinylesters einer gesättigten Carbonsäure. Dies sind beispielsweise Propylen/Vinylacetat/Maleinsäureanhydrid-Copolymere, Propylen/Alkyl(meth)acrylat/Maleinsäureanhydrid-Copolymere oder aber Propylen/Zn- oder Li(meth)acrylat/Maleinsäureanhydrid-Copolymere. welches Säure-, Anhydrid- oder Epoxy-modifiziert ist.

Die Dichte des funktionalisierten Polyolefins liegt vorteilhafterweise zwischen 0,86 und 0,965 g/ml.

Mehr bevorzugt ist das Polyolefin durch ein Carbonsäureanhydrid funktionalisiert.

Besonders bevorzugt ist das funktionalisierte Polyolefin ein Maleinsäureanhydridgepfropftes Propylen-Copolymer.

Bevorzugt dienen die erfindungsgemäßen mehrschichtigen Hohlkörper zur Lagerung oder zum Transport eines wässrigen Mediums.

In Abbildung 1 ist die Reißdehnung von Rohren in Abhängigkeit von der Alterung gezeigt. Die Rauten und durchgezogene Linie entsprechen Rohr R3 der Ausführung des Standes der Technik gemäß EP1771298A, die Kreise und gepunktete Linie entsprechen dem erfindungsgemäßen Rohr R2 und die gefüllten Kreise und gestrichelte Linie entsprechen dem erfindungsgemäßen Rohr R1. Damit ist die verbesserte mechanische Stabilität unter identischen Alterungsbedingungen gegenüber dem Stand der Technik belegt.

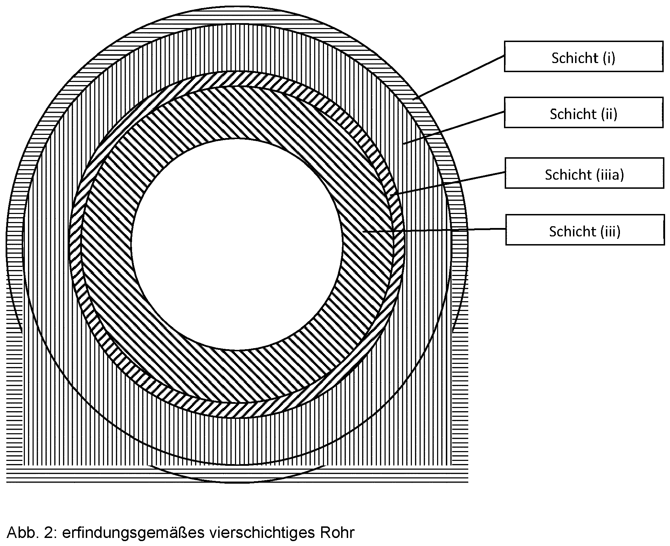

In Abbildung 2 ist ein beispielhaftes Rohr mit den Schichten (i), (ii), (iiia) und (iii) gezeigt.

Methoden:

### Endgruppenbestimmungen

### Carboxylatendgruppen:

2,0 g (Erwartungswert unter 15 mmol/kg), bzw. 1,0 g (Erwartungswert über 15 mmol/kg) der Probe werden in einem Wägebehälter eingewogen. Ca. 40 ml (bzw. 20 ml) Benzylalkohol werden in das thermostatisierte Titrationsgefäß vorgelegt. Anschließend wird die Probe in Benzylalkohol überführt und unter Inertgas unter Rühren die Probe gelöst. Die Lösezeit beträgt 10 min (bzw. 15 min).

Nach dem Lösen werden 3 Tropfen Indikatorlösung zugegeben und zügig mit Kalilauge (KOH in Wasser) (Konzentration 0,1 mol/l) titriert.

### Aminoendgruppen:

0,5 g der Probe werden eingewogen und mit 50 ml m-Kresol versetzt. Die Probe wird unter Erwärmung auf 100°C innerhalb einer Stunde gelöst (ggf. wird eine Temperatur von 140°C verwendet). Nach Abkühlung auf Raumtemperatur werden 5 ml Methanol zugegeben und die potentiometrische Titration gestartet. Zur Auswertung wird ein Blindwert der Lösemittelmischung subtrahiert.

### Relative Lösungsviskosität:

Die Bestimmung erfolgte in Anlehnung an ISO 307: Granulat wurde bei 100°C mit einer Konzentration von 0,005 g/ml in m-Kresol über 2 h gelöst. Die Messung mittels Schott AVS Pro III erfolgte bei 25°C.

### Materialien:

PA1: Schlagzäh modifiziertes, wärmestabilisiertes PA12 mit Amino-Endgruppenüberschuss ohne Füllstoffe
PA2: Ungefülltes, unmodifiziertes, amingeregeltes PA12 mit rel. Lösungsviskosität 2,1 VESTAMID F: Farbgranulat auf Basis PA12
Polyolefin (PO): Polypropylen, RTP199X111239, Stabilisierte Polypropylen-Extrusionsformmasse der Firma RTP
Haftvermittler (HV): Maleinsäure funktionalisiertes Polypropylen der Firma Mitsui, Admer QB520 E

**Tabelle 1a: Zusammensetzung der elastomeren Polyamide**

| | Weichblock [g/mol] | Hartblock [g/mol] | | HB / WB |
|---|---|---|---|---|
| | PTHF | PA 12 | PA 6.12 | |
| PEBA1 | 1000 | 1068 | | 1,1 |
| PEBA2 | 1000 | 2270 | | 2,3 |
| PEBA3 | 1000 | 4100 | | 4,1 |
| PEBA4 | 1000 | 7000 | | 7,0 |
| PEBA5 | 650 | | 2800 | 4,3 |

**Tabelle 1b: PEBA Blends: Mischungen von PEBA3 mit PA2**

| plus 1 Gew.-% Naugard 445, 2,3 Gew.-% VESTAMID F und 0,02 Gew.-% Ceasit PC | | |
|---|---|---|
| Blend | PEBA3 [%] | PA2 [%] |
| B1 | 29,5 | 67,18 |
| B2 | 49,5 | 47,18 |
| B3 | 69,5 | 27,18 |
| B4 | 96,68 | 0 |

Diese elastomeren Polyamidblends sind mittels eines Doppelschneckenextruders compoundiert worden.

Für die Rohrherstellung wurde in die elastomeren Polyamide PEBA3 und PEBA5 1% Naugard 445 mittels eines Doppelschneckenextruders eingebracht.

### Beispiel 1:

### Herstellung der Rohre:

Auf einer Mehrschichtanlage wurden 4-Schicht Rohre mit einem Außendurchmesser von 8 mm und einer Wanddicke von 1 mm hergestellt. Die Massentemperaturen betrugen 250°C. Die Extrusionsgeschwindigkeit betrug 12 m/min.

**Tabelle 2: Rohre R1 bis R3 gemäß Herstellungsbeschreibung des Beispiels 1: Innenschicht und Haftvermittler für alle Proben identisch.**

| Rohr | Schicht (i) | Schicht (ii) | Schicht (iiia) | Schicht (iii) |
|---|---|---|---|---|
| R1 | PEBA3 (100µm) | PA1 (350µm) | HV (100µm) | PO (450µm) |
| R2 | PEBA5 (100µm) | PA1 (350µm) | HV (100µm) | PO (450µm) |
| R3 | - | PA1 (450µm) | HV (100µm) | PO (450µm) |

Rohr R3 entspricht einer Kühlmittelleitung gemäß EP1771298A. Beispiele R1 und R2 sind erfindungsgemäß.

### Beispiel: Anwendungsbeständigkeit der Rohre (Kombination aus Hitze- und Hydrolyse-Belastung)

Die Rohre werden in 3m lange Abschnitte zerteilt und konnektiert in einem Heißluftofen für bis zu 2000 h bei 130°C mit einer Ethylenglykol-Wasser Mischung (1/1 [V/V]) rezirkulierend durchströmt, die Außentemperatur betrug ebenfalls 130°C.

Zur Vorbereitung der mechanischen Prüfung werden die Rohre mehrfach mit voll entsalztem Wasser gespült, in Stücke von 180 mm Länge geschnitten und mindestens 16 h bei Normklima (23°C / 50% rel. Feuchte) gelagert.

Die Probestücke werden in einer Zugmaschine in Anlehnung an DIN 527-2 (2012) zur Bestimmung der Reißdehnung untersucht. Die Prüftemperatur lag bei 23°C und die Prüfgeschwindigkeit 100 mm/min (5 Probestücke).

**Tabelle 3: Reißdehnung der Rohre nach Beispiel 1**

| Zeitpunkt [h] | Reißdehnung [%] | | |
|---|---|---|---|
| | R1 | R3 | R2 |
| 0 | 483 | 406 | 480 |
| 750 | - | - | 462 |
| 1000 | 561 | 221 | 467 |
| 1300 | 325 | 68 | |
| 1423 | - | - | 505 |
| 1500 | 237 | 6,6 | - |
| 1750 | - | - | 197 |
| 2000 | 5,1 | - | - |

Die Vorteile der erfindungsgemäßen Rohre gegenüber dem Stand der Technik sind eine verlängerte zeitliche Verwendung bei einer gleichzeitig verbesserten "elongation at break" (Reißdehnung bis zum Bruch, Bruchdehnung). Diese Werte sind in Abb. 1 dargestellt.

### Hydrolysebeständigkeit:

Spritzgegossene Probekörper (gesägte Mittelstücke von Mehrzweckstäben) bestehend aus den aufgeführten Blends nach Tabelle 1b wurden im Autoklaven in einer Ethylenglykol-Wasser Mischung (1/1 [V/V]) bei 130°C behandelt.

Zur Stabilitätsbestimmung wurden die Charpy Impact Faktoren bei -40°C bestimmt. Angewendet wurde die Norm ISO 179-1: 2010 an Probekörpern 1eU, ungekerbt.

**Tabelle 4: Charpy Schlagzähigkeit [kJ/m²], Mittelwerte von 6 Probekörpern**

| Blend | 600h | 1000h | 1300h | 2000h |
|---|---|---|---|---|
| B1 | 16,3 | 7,2 | 6,6 | 1,2 |
| B2 | 9,4 | 4,6 | 3,4 | 2 |
| B3 | 0,5 | 0,4 | - | - |
| B4 | 0 | 0 | 0 | 0 |

Es ist ersichtlich, dass die Schlagzähigkeit mit zunehmendem Polyetherblockamid-Gehalt abnimmt.

### Sauerstoffdurchlässigkeit:

Die Sauerstoffdurchlässigkeit wurde an extrudierten Folien einer Dicke von etwa 100µm als Doppelbestimmung gemäß ISO 15105 unter Luft-Atmosphäre mit Stickstoff als Carriergas durchgeführt. Die atmosphärischen Bedingungen waren 23°C und 50% rel. Feuchte.

**Tabelle 3: Sauerstoffpermeation:**

| | Einzelwert 1 [cm³/m² * d*bar] | Einzelwert 2 [cm³/m² * d*bar] | Foliendicke [µm] |
|---|---|---|---|
| PA1 | 316 | 316 | 98 |
| PEBA3 | 686 | 686 | 101 |

Es ist ersichtlich, dass die Durchlässigkeit des PEBA3 etwa doppelt so hoch ist wie die des reinen Hartblockpolymers.

## Patentansprüche

1. Hohlkörper, geeignet zur Lagerung oder zum Transport eines wässrigen Mediums, dessen Wandung mindestens drei Schichten aufweist, wobei die Schichten von außen nach innen folgendermaßen aufgebaut sind:
i. Schicht aus einer Formmasse, die ein elastomeres Polyamid enthält,
ii. Schicht aus einer Formmasse, die ein nicht elastomeres Polyamid enthält,
iii. Schicht aus einer Formmasse, die ein Polyolefin aufweist, welches keine Halogenatome aufweist.

2. Hohlkörper nach Anspruch 1, wobei das elastomere Polyamid der Schicht (i) ein Blockcopolyamid ist, die Hart- und Weichsegmente aufweisen, dessen Weichsegmente Polyether sind.

3. Hohlkörper nach mindestens einem der Ansprüche 1 oder 2, wobei das elastomere Polyamid der Schicht (i) ein Blockcopolyamid ist, dessen Weichsegmente Polyether sind, wobei die Polyether eine lineare Kette aufweisen.

4. Hohlkörper nach mindestens einem der Ansprüche 2 bis 4, wobei der Polyether über eine Esterbindung an die Hartsegmente gebunden sind.

5. Hohlkörper nach mindestens einem der Ansprüche 1 oder 2, wobei die Formmasse der Schicht (i). kein funktionalisiertes Polyolefin enthält.

6. Hohlkörper nach mindestens einem der vorhergehenden Ansprüche, wobei die Formmasse der Schicht (i) einen Wärmestabilisator aufweist.

7. Hohlkörper nach Anspruch 1, wobei das nicht elastomere Polyamid der Schicht (ii) ein aminterminiertes Polyamid ist.

8. Hohlkörper nach Anspruch 1, wobei das Polyolefin der Schicht (iii) ein nicht funktionalisierter Kohlenwasserstoff ist.

9. Hohlkörper nach Ansprüchen 1 oder 8, wobei das Polyolefin der Schicht (iii) Polypropylen enthält.

10. Hohlkörper nach Ansprüchen 1, 8 oder 9, wobei Schicht (iii) eine weitere Schicht (iiia) enthält, und diese.Schicht (iiia) zwischen Schicht (ii) und Schicht (iii) liegt.

11. Hohlkörper nach Anspruch 8, wobei die weitere Schicht (iiia). ein Polyolefin aufweist, welches modifiziert ist.
